(19) Europäisches Patentamt
European Patent Office
Office européen des brevets

(11) **EP 1 936 403 B1**

(12) **EUROPÄISCHE PATENTSCHRIFT**

(45) Veröffentlichungstag und Bekanntmachung des Hinweises auf die Patenterteilung:
**25.06.2014 Patentblatt 2014/26**

(51) Int Cl.:
**G01S 15/10** *(2006.01)* **G01S 15/88** *(2006.01)*
**G01F 23/296** *(2006.01)* **G01S 7/527** *(2006.01)*
**G01S 13/20** *(2006.01)*

(21) Anmeldenummer: **07002623.2**

(22) Anmeldetag: **07.02.2007**

(54) **Ultraschallsensor und Verfahren zum Bestimmen eines Abstands eines Objekts von einem Ultraschallsensor**

Ultrasonic sensor and method for determining the distance of an object from an ultrasonic sensor

Capteur à ultrasons et procédé destiné à la détermination de la distance entre un objet et un capteur à ultrasons

(84) Benannte Vertragsstaaten:
**AT CH DE FR GB IT LI**

(30) Priorität: **20.12.2006 EP 06026470**

(43) Veröffentlichungstag der Anmeldung:
**25.06.2008 Patentblatt 2008/26**

(73) Patentinhaber: **Pepperl + Fuchs GmbH**
**68307 Mannheim (DE)**

(72) Erfinder:
• **Hasieber, Oliver**
**67098 Bad Dürkheim (DE)**
• **Schwiderski, Frank**
**68169 Mannheim (DE)**

(74) Vertreter: **Schiffer, Axel Martin et al**
**Weber & Heim Patentanwälte**
**Irmgardstrasse 3**
**81479 München (DE)**

(56) Entgegenhaltungen:
EP-A- 1 460 396      EP-B1- 0 705 444
WO-A-01/46653       WO-A-96/24027
DE-C1- 4 204 414    US-A- 5 923 282
US-B1- 6 345 683

EP 1 936 403 B1

**Beschreibung**

Die vorliegende Erfindung bezieht sich in einem ersten Aspekt auf ein Verfahren zum Bestimmen eines Abstands eines Objekts von einem Ultraschallsensor nach dem Oberbegriff des Anspruchs 1.

In einem weiteren Gesichtspunkt betrifft die Erfindung einen Ultraschallsensor nach dem Oberbegriff des Anspruchs 10.

Bei einem gattungsgemäßen Verfahren, das beispielsweise in EP 0 705 444 B1 beschrieben ist, werden Ultraschallpulse von einem Wandlerelement ausgesendet und von einem Objekt reflektierte Ultraschallpulse werden von demselben Wandlerelement nachgewiesen.

Ein gattungsgemäßer Ultraschallsensor ist ebenfalls in EP 0 705 444 B1 beschrieben und weist ein Wandlerelement zum Aussenden von Ultraschallpulsen und zum Nachweis von von dem Objekt reflektierten Ultraschallpulsen sowie eine mit dem Wandlerelement zusammenwirkende Auswerteeinheit auf zum Bestimmen des Abstands des Objekts auf Grundlage der nachgewiesenen Ultraschallpulse.

In bisherigen Ultraschall-Näherungsschaltern wird die Entfernung eines Objekts über die Schalllaufzeit eines Ultraschallimpulses bestimmt. In Einkopfsystemen, das heißt solchen Systemen, in denen ein Ultraschallwandler sowohl als Sender wie auch als Empfänger verwendet wird, wird der Ultraschallwandler mit Hilfe einer elektrischen Spannung angeregt und sendet dabei einen Ultraschallimpuls aus. Als Ultraschallwandler dient in den meisten Sensoren ein Piezo-System. Nach Anregung des Wandlers, die über eine Zeit von einigen Mikrosekunden erfolgt, wird der Ultraschallwandler als Empfänger verwendet. Der ausgesendete Ultraschallimpuls wird an einem Objekt reflektiert und läuft zum Sensor zurück. Der Ultraschallwandler wandelt den Echopuls in eine elektrische Spannung um und auf Grundlage einer gemessenen Laufzeit des Schalls wird der Abstand des Objekts vom Sensor berechnet.

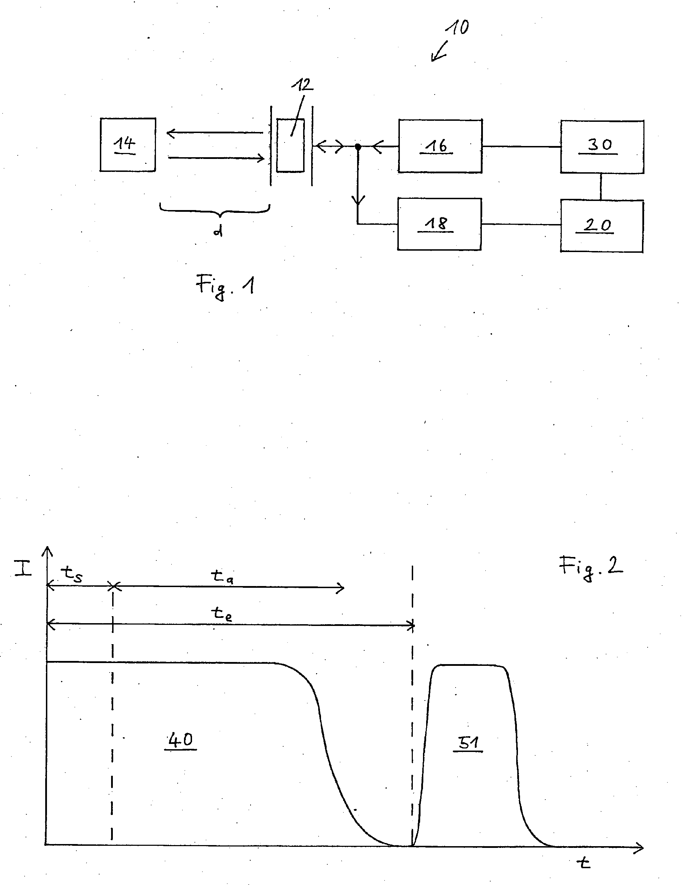

Eine Schwierigkeit bei diesem Verfahren besteht darin, dass der Ultraschallwandler nach dem Abschalten der Anregungs- oder Sendespannung nicht sofort zum Empfangen des Echos genutzt werden kann, da der Piezo-Kristall über eine endliche Zeit ausschwingt. Erst nach einigen Mikrosekunden ist der Sendeimpuls soweit abgeklungen, dass ein Echo detektiert werden kann, siehe Figur 2. Die minimale, mit einem bestimmten Sensor nachzuweisende Entfernung eines Objekts ist deshalb nach unten durch das Ausschwingen des Ultraschallwandlers begrenzt.

Aus EP 0 705 444 B1, DE 4204 414 C1 und WO 96/24027 A2 ist zwar bekannt, dass auch die weiteren Echosignale zur Auswertung herangezogen werden. Dies führt aber wegen der häufig wenig guten Signalqualität nicht zu der gewünschten Genauigkeit.

Weitere Ultraschallsensoren sind in EP 0 316 511 A2, DE 101 03 936 C2, JP 2005121 509 A und DE 103 23 063 A1 beschrieben.

**Aufgabe** der Erfindung ist, ein Verfahren zum Bestimmen eines Abstands eines Objekts von einem Ultraschallsensor und einen Ultraschallsensor anzugeben, die ein zuverlässiges Bestimmen des Abstands auch für sehr kleine Abstände ermöglichen.

Diese Aufgabe wird in einem ersten Aspekt der Erfindung durch das Verfahren mit den Merkmalen des Anspruchs 1 gelöst.

In einem zweiten Aspekt der Erfindung wird die Aufgabe durch den Ultraschallsensor mit den Merkmalen des Anspruchs 10 gelöst.

Vorteilhafte Varianten des erfindungsgemäßen Verfahrens und bevorzugte Weiterbildungen des erfindungsgemäßen Ultraschallsensors sind Gegenstand der abhängigen Patentansprüche.

Das Verfahren der oben genannten Art ist erfindungsgemäß dadurch weitergebildet, dass eine Spektralanalyse eines von dem Wandlerelement nachgewiesenen Signals durchgeführt wird, dass eine auf Mehrfachechos der Ultraschallpulse zurückgehende Mehrfachechofrequenz im Spektrum des Nachweissignals ermittelt wird und dass auf Grundlage der Mehrfachechofrequenz der Abstand des Objekts zum Ultraschallsensor bestimmt wird.

Der Ultraschallsensor der oben beschriebenen Art ist erfindungsgemäß dadurch weitergebildet, dass die Auswerteeinheit eine Recheneinheit aufweist zum Durchführen einer Spektralanalyse des von dem Wandlerelement nachgewiesenen Signals, zum Ermitteln einer auf Mehrfachechos der Ultraschallpulse zurückgehenden Mehrfachechofrequenz im Spektrum des Nachweissignals und zum Bestimmen des Abstands des Objekts auf Grundlage der Mehrfachechofrequenz.

Als Kerngedanke der Erfindung kann angesehen werden, zur Auswertung und zur Bestimmung des Abstands die Gesamtheit des von dem Wandlerelement nachgewiesenen Signals, insbesondere die Mehrfachechos auszuwerten. Auf diese Weise wird der Informationsgehalt des Nachweissignals des Wandlerelements erheblich besser ausgeschöpft und nutzbar gemacht als im Stand der Technik.

Als weiterer Kerngedanke der Erfindung ist anzusehen, das Nachweissignal des Wandlerelements spektral zu zerlegen und eine zu den Mehrfachechos gehörende Mehrfachfrequenz im Spektrum zu bestimmen. Auf Grundlage dieser Mehrfachechofrequenz wird dann der Abstand des Objekts bestimmt.

Ein wesentlicher Vorteil der Erfindung kann darin gesehen werden, dass mit Hilfe der neuartigen Auswertung der Nahbereich des Sensors erheblich verkleinert werden kann. Hieraus ergeben sich zahlreiche neue Anwendungsmöglichkeiten für Ultraschallsensoren.

Zur Spektralanalyse wird bevorzugt eine Fast-Fourier-Transformation durchgeführt. Hierbei handelt es sich um einen gut bekannten, besonders schnellen Algorithmus, der mit kommerziell erhältlichen Mikrocontrollern als Recheneinheiten realisiert werden kann.

Zweckmäßig werden ein Gleichanteil und tiefe Frequenzen des Nachweissignals vor Durchführung der Spektralanalyse herausgefiltert. Dies kann grundsätzlich mit einem geeigneten Hochpass erfolgen. Entsprechend können auch sehr hohe Frequenzen herausgefiltert werden. Alternativ kann nach errechnetem Spektrum eine Plausibilitätsprüfung durchgeführt werden, beispielsweise können nur Frequenzen in einem bestimmten Intervall berücksichtigt werden. Typischerweise liegt die Mehrfachechofrequenz, die für die Bestimmung des Abstands des Objekts herangezogen wird, in einem Bereich von 2 bis 40 kHz.

Abgesehen von einer hohen, auf einen Gleichanteil des Nachweissignals zurückgehenden Intensität, ist die Mehrfachechofrequenz normalerweise das Signal im Spektrum mit dem höchsten Energiegehalt, im einfachsten Fall also der höchste Peak. Aus der Frequenzposition dieses Maximums wird unter Zuhilfenahme der im Allgemeinen temperaturabhängigen Schallgeschwindigkeit der Abstand bestimmt. Die Genauigkeit dieser Bestimmung hängt somit direkt mit der Genauigkeit der Frequenzbestimmung zusammen, die grundsätzlich gesteigert werden kann durch Erhöhen der Punktzahl für die Fourier-Transformation. Allerdings ist dies auch mit einer Erhöhung der Rechenzeit verbunden.

Zweckmäßig wird die Spektralanalyse für ein Basisband-Signal, also eine Hüllkurve, des Wandlerelements durchgeführt. Dies hat den Vorteil, dass die Frequenztransformation und damit die Rechenkapazität auf die interessierenden Bereiche, also auf Frequenzen deutlich unterhalb der Frequenz des Basisbands, konzentriert wird.

Besonders elegant kann die Genauigkeit der Bestimmung der Spektralposition des Intensitätsmaximums erhöht werden, wenn im Bereich der Mehrfachechofrequenz im Spektrum für eine ausgewählte Zahl von Punkten um ein zunächst ermitteltes Intensitätsmaximum ein gewichtetes Mittel der Spektralpositionen gebildet wird, wobei die Spektralpositionen der ausgewählten Punkte mit den dort jeweils ermittelten Intensitäten gewichtet werden. Diese Bestimmung erfolgt analog etwa zur Schwerpunktsbestimmung in der Mechanik.

Ohne nennenswerte Steigerung der Rechenzeit kann auf diese Weise die Genauigkeit der Frequenz- und damit der Abstandsbestimmung deutlich erhöht werden. Beispielsweise wird bei einer Fast-Fourier-Transformation mit nur 256 Punkten unter Zuhilfenahme der hier beschriebenen Schwerpunktsinterpolation bereits eine etwa dreimal genauere Abstandsbestimmung als mit einer Fast-Fourier-Transformation mit 1024 Punkten ohne Schwerpunktinterpolation erreicht.

Besonders zweckmäßig können bei dieser Verfahrensvariante zur Bildung des gewichteten Mittels der Punkt maximaler Intensität und auf dessen rechter und linker Seite im Spektrum jeweils n, insbesondere n = 2, 3 oder 4, weitere Punkte verwendet werden.

Je weiter sich ein Objekt vom Sensor entfernt, umso größer ist der zeitliche Abstand der Mehrfachechos und umso weniger Mehrfachechos werden in einem Messzyklus nachgewiesen. Dies bedeutet im Frequenzraum, dass die Bestimmung der Frequenz immer ungenauer wird. Die Genauigkeit der Ortsbestimmung nimmt somit mit zunehmenden Abstand ab, so dass bei großen Entfernungen die Abstandsbestimmung über die Mehrfachechofrequenz ungünstig wird.

Bei einer besonders bevorzugten Variante des erfindungsgemäßen Verfahrens und des erfindungsgemäßen Ultraschallsensors wird deshalb ein Grenzabstand des Objekts zum Ultraschallsensor definiert, wobei oberhalb dieses Grenzabstands der Abstand des Objekts unter Verwendung der Laufzeit des ersten Echos ermittelt, unterhalb des Grenzabstands der Abstand des Objekts jedoch unter Verwendung der Mehrfachechofrequenz bestimmt wird. Bei diesem Verfahren werden die Vorteile der erfindungsgemäßen Auswertung der Mehrfachechofrequenz kombiniert mit den Vorteilen der klassischen Schwellwertanalyse, bei der zur Bestimmung des Abstands das erste Echo des Objekts ausgewertet und mit einer Schwelle verglichen wird.

Bei einer solchen Verfahrensvariante kann vorteilhaft für die Bestimmung von Abständen, die größer als der Grenzabstand sind, mit einer längeren Anregungsdauer des Wandlerelements gearbeitet werden als für Objektabstände, die kleiner sind als der Grenzabstand. Die Messung oberhalb des Grenzabstands kann dann mit sehr gut definierten Ultraschallpulsen durchgeführt werden und für die Messung unterhalb des Grenzabstands bleibt gewährleistet, dass im Wesentlichen alle Mehrfachechos ausgenutzt werden können.

Um möglichst die gesamte verwertbare Information in einer Messung aufzunehmen, gleichwohl aber die Messzeit nicht unnötig zu verlängern, wird zweckmäßig spezifisch für einen Ultraschallsensor eine Messzeit eingestellt, durch die ein Kompromiss zwischen Messgenauigkeit und Messdauer realisiert wird. Dies kann spezifisch für bestimmte Ultraschallsensoren, grundsätzlich aber auch angepasst an bestimmte Messsituationen erfolgen.

Im Hinblick auf die verwendeten Komponenten im Ultraschallsensor und der Auswerteelektronik ist darüber hinaus zweckmäßig, wenn die Genauigkeit eines dem Wandlerelement nachgeordneten Analog-Digital-Wandlers abgestimmt ist auf die Genauigkeit, mit der die Fourier-Transformation durchgeführt wird. Untersuchungen haben ergeben, dass beispielsweise für eine Fourier-Transformation auf einer Länge von 256 Punkten, was einem Störabstand von S/N von 57,2 dB entspricht, der Einsatz eines 10-Bit-ADC ausreichend ist. Wenn dies berücksichtigt wird, können Überdimensionierungen der Komponenten vermieden und Kosten gespart werden.

Weitere Vorteile und Eigenschaften des erfindungsgemäßen Verfahrens und des erfindungsgemäßen Ultraschallsensors werden nachstehend mit Bezug auf die beigefügten Figuren beschrieben. Hierin zeigt:

Fig. 1:  Eine schematische Ansicht eines erfindungsgemäßen Ultraschallsensors;

Fig. 2: eine schematische Ansicht des Verlaufs von Sende- und Echopulsen, bei Einkopf-Ultraschallsensoren;

Fig. 3 bis 5: Beispiele für den Signalverlauf des Nachweissignals bei verschiedenen Objektabständen;

Fig. 6: ein weiteres Beispiel für den Verlauf des Nachweissignals;

Fig. 7: ein errechnetes Frequenzspektrum des Nachweissignals aus Fig. 6; und

Fig. 8: einen schematischen Ausschnitt eines errechneten Spektrums zur Erläuterung der Schwerpunktinterpolation.

Fig. 1 zeigt einen erfindungsgemäßen Ultraschallsensor 10, der als wesentliche Komponenten einen Ultraschallwandler 12, eine Ansteuereinheit 16, eine Pulsformeinheit 18, einen Analog-Digital-Wandler 20 und eine Auswerteeinheit 30 mit einer erfindungsgemäß vorgesehenen Recheneinheit aufweist. Äquivalente Komponenten sind in allen Figuren mit denselben Bezugszeichen versehen.

Die grundlegende Problemstellung wird mit Bezug auf die Figuren 2 bis 5 erläutert.

Fig. 2 zeigt den typischen Verlauf einer Schwingungsanregung des Ultraschallwandlers 12 aufgetragen als Intensität in beliebigen Einheiten gegen die Zeitachse. Zunächst wird der Wandler 12 über ein Zeitintervall $t_s$ angeregt, so dass ein Ultraschallpuls ausgesendet wird. Wegen der Trägheit der im Festkörper schwingenden Massen endet die Schwingung nicht unmittelbar mit dem Ende der Anregung durch die Ansteuereinheit 16, also nicht sofort nach Ablauf der Zeit $t_s$. Vielmehr schwingt der Piezo-Kristall noch für eine Zeit $t_a$ weiter Insgesamt liegt also ein Sendeimpuls 40 mit einer Dauer $t_s + t_a$ vor. Dieser Puls läuft bis zu einem Objekt 14, dessen Entfernung d zum Ultraschallsensor 10 bestimmt werden soll, wird von diesem reflektiert und läuft sodann zurück zum Ultraschallsensor 10. Der zurücklaufende Puls oder Echopuls 51 regt den Piezo-Kristall des Wandlerelements 12 wiederum zu Schwingungen an, wie in Fig. 2 schematisch dargestellt. Ein zeitlicher Abstand $t_e$ der Pulse 40 und 51 entspricht der Laufzeit des Ultraschallpulses vom Wandlerelement 12 zum Objekt 14 und zurück. Diese Laufzeit ist aufgrund der Temperaturabhängigkeit der Schallgeschwindigkeit ebenfalls temperaturabhängig.

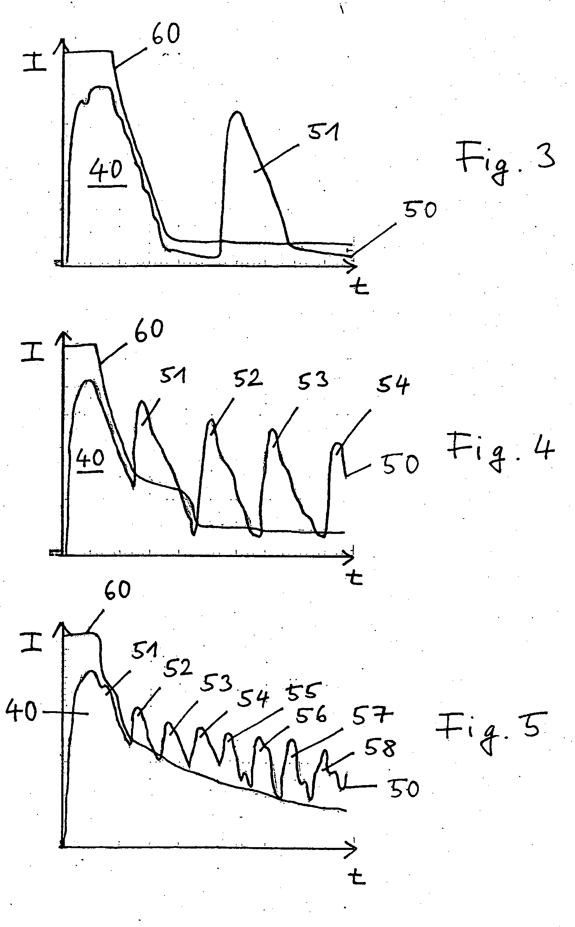

Bei kurzen Abständen folgt das erste Echo 51 zeitlich sehr dicht auf das Ausschwingen des Wandlerelements 12 oder überlappt mit diesem. Dies ist in den Figuren 3 bis 5 dargestellt, wobei die dort gezeigten Signale 50 Hüllkurven oder analog demodulierte Basisbandsignale sind.

Der vom Wandlerelement 12 ausgesendete Impuls ist dort jeweils mit dem Bezugszeichen 40 gekennzeichnet. Die durch das Objekt 14 verursachten Echosignale sind mit den Bezugszeichen 51 bis 58 versehen. Während in den Figuren 3 und 4 das erste Echo 51 jeweils noch klar über einer abstandsabhängig eingestellten Schwelle 60 liegt, ist dies in Fig. 5 nicht mehr der Fall. Das erste Echo 51 kann dort demgemäß zur Abstandsbestimmung nicht verwendet werden. Andererseits liefert die Messung in Fig. 5 eine Vielzahl von weiteren Echosignalen 52 bis 58.

Grundidee der Erfindung ist, die Information, die in den gerade im Nahbereich eines Ultraschallsensors auftretenden Mehrfachechos enthalten ist, auszuwerten. Ein empfangenes Echo wird an dem Ultraschallwandler erneut reflektiert und durchläuft die Strecke zwischen Ultraschallsensor 10 und 14 somit weitere Male. Die daraus resultierenden Mehrfachechos 51 bis 58 enthalten deshalb ebenso die Laufzeit $t_e$ des Ultraschallpulses vom Sensor 10 bis zum Objekt 14. Erfindungsgemäß wird die in der Abfolge der Mehrfachechos enthaltene Information über eine Spektralanalyse ausgewertet.

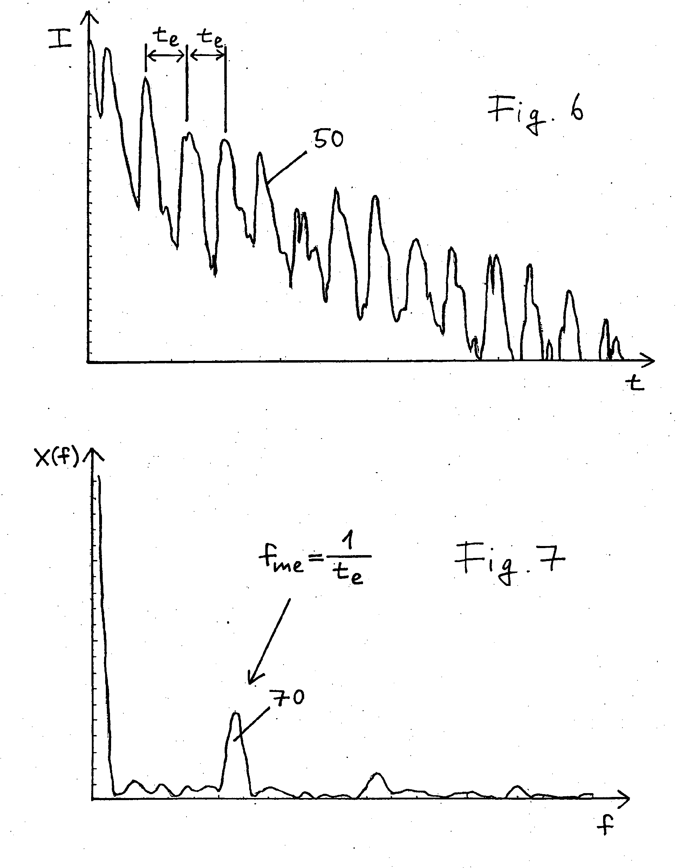

Die Auswertung des Basisbandsignals durch eine Fouriertransformation, insbesondere eine Fast-Fourier-Transformation FFT, beruht auf der Tatsache, dass die Mehrfachechos 51 bis 58 im Basisband ein periodisches Signal erzeugen. Diese Periodizität lässt sich am besten im Frequenzbereich erkennen. Hierdurch wird das komplette Basisbandsignal abgetastet und in den Frequenzbereich transformiert. Dies wird im Zusammenhang mit den Fig. 6 und 7 näher erläutert.

In Fig. 6 ist ein weiteres Beispiel eines Nachweissignals 50 des Wandlerelements 12 mit einer Vielzahl von Echosignalen aufgetragen.

Grundsätzlich könnte die Auswertung der Messung aus Fig. 6 auch in der Zeitdomäne erfolgen. Hierzu können die Echos eines Messzyklus mit Hilfe eines Mikroprozessors oder Mikrocontrollers erfasst und die zeitlichen Abstände bestimmt werden. Nach Anwendung von standardmäßigen Signalbearbeitungsschritten, wie Mittelungen, Filterungen, beispielsweise mit einem Gauss-Filter, kann nun die Laufzeit $t_e$ gewonnen werden. Mit Hilfe der Formel:

$$d = t_e \times v_s(T)/2$$

kann hieraus sodann der Abstand d des Objekts vom Ultraschallsensor errechnet werden, wobei $V_s$ die temperaturabhängige Schallgeschwindigkeit ist. Wie aber bereits in Fig. 6 ersichtlich, sind die Maxima der Echos nicht gut aufgelöst und die Bestimmung der Zeit $t_e$ ist somit nur ungenau möglich. Hieraus resultiert eine vergleichsweise nur ungenaue Abstandsbestimmung.

Abhilfe schafft hier die erfindungsgemäß vorgesehene Fourier-Transformation, deren Ergebnis in Fig. 7 schematisch dargestellt ist. Aufgetragen ist dort eine Intensität X(f) in beliebigen Einheiten gegen eine Frequenzachse. Neben der hohen Intensität um den Nullpunkt der Frequenzachse, die auf einen Gleichanteil des Nachweissignals zurückzuführen ist, weist das Frequenzspektrum ein ausgeprägtes Maximum 70 auf. Dieses Maximum entspricht der Grundperiodizität der Mehrfachechos in Fig. 6. Aufgrund des Zusammenhangs zwischen der Schalllaufzeit $t_e$ und der äquivalenten Frequenz $f_{me}$:

$$f_{me} = 1/t_e$$

kann mit der durch Fourier-Transformation ermittelten Frequenz auf die Schalllaufzeit und somit ebenfalls auf den Abstand d des Objekts zurückgerechnet werden. Um die Frequenz $f_{me}$ zu bestimmen, wird im Spektrum X(f) nach der Frequenz mit dem größten Energiegehalt gesucht. Hierbei muss beachtet werden, dass das Basisbandsignal einen Gleichanteil enthält und somit die spektrale Komponente um f = 0 ausgeblendet werden muss. Ebenso ist möglich, vor der Transformation in den Frequenzbereich eine Filterung, beispielsweise mit Hilfe von Hochpassfiltern, durchzuführen, um die gleich- bzw. tieffrequenten Anteile im Basisbandsignal zu eliminieren. Da mit zunehmenden Objektabstand d die Frequenz $f_{me}$ und auch die Anzahl der Mehrzahlechos, also insgesamt der Informationsgehalt, abnimmt, eignet sich dieses Verfahren besonders gut zur Analyse im Nahbereich.

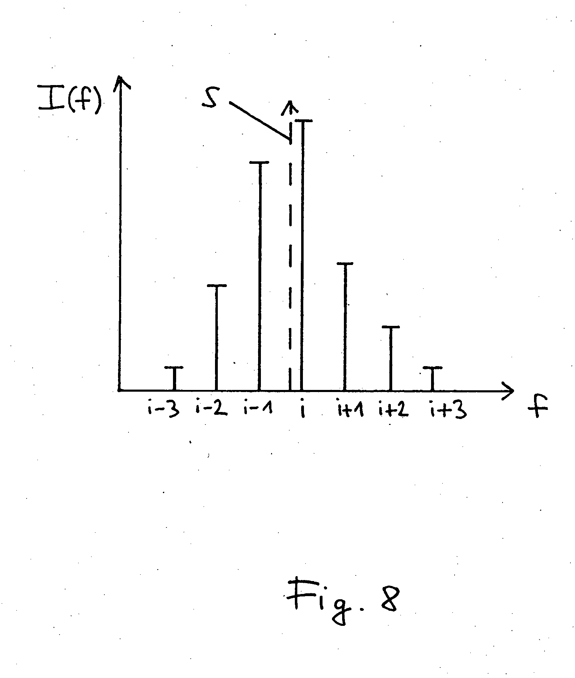

Eine besonders bevorzugte Verfahrensvariante, bei der die Frequenzposition der stärksten Linie im Frequenzspektrum besonders genau bestimmt werden kann, wird mit Bezug auf Fig. 8 beschrieben. Dort ist schematisch ein Ausschnitt aus einem errechneten Fourier-Spektrum für insgesamt 7 Punkte dargestellt. Die maximale Intensität wird dabei festgestellt für die Frequenzposition i. Unmittelbar ersichtlich aus Fig. 8 ist die unsymmetrische Verteilung der Intensitäten der 3 Punkte auf der rechten bzw. der linken Seite der Position i. Das bedeutet, dass in Wirklichkeit die Frequenzposition maximaler Intensität zwischen den Punkten i und i-1 liegt. Diese wirkliche Maximalposition kann durch ein an die Schwerpunktsbestimmung in der Mechanik angelehntes Verfahren angenähert werden. Für diese Schwerpunktsinterpolation wird für eine ausgewählte Zahl von Punkten ein gewichtetes Mittel gebildet, wobei die Position im Spektrum jeweils mit der dort festgestellten Intensität gewichtet wird. Wenn dies beispielsweise für die in Fig. 8 gezeigten Punkte durchgeführt wird, erhält man einen Wert S, der in Fig. 8 als gestrichelter Pfeil dargestellt ist. Zweckmäßig werden für die Berechnung der Schwerpunktsinterpolation der Punkt maximaler Intensität sowie auf der rechten und linken Seite im Spektrum jeweils eine kleine Zahl weiterer Punkte, beispielsweise n = 2, 3 oder 4, herangezogen. Die Genauigkeit der Ortsbestimmung kann bei einem für 256 Punkte berechneten Frequenzspektrum um etwa einen Faktor 3 erhöht werden.

Mit der vorliegenden Erfindung wird ein neuartiges Verfahren zur Bestimmung eines Abstands zwischen einem Objekt und einem Ultraschallsensor sowie ein neuartiger Ultraschallsensor bereitgestellt, mit denen eine erhebliche Verkürzung des Nahbereichs und somit eine deutliche Erhöhung der Funktionalität von Ultraschallsensoren erreicht wird.

**Patentansprüche**

1. Verfahren zum Bestimmen eines Abstands eines Objekts von einem UltraschallSensor, insbesondere nach einem der Ansprüche 10 bis 12,
   bei dem Ultraschallpulse (40) von einem Wandlerelement (12) ausgesendet werden und
   bei dem von dem Objekt (14) reflektierte Ultraschallpulse (51,..,58) von demselben Wandlerelement (12) nachgewiesen werden,
   **dadurch gekennzeichnet,**
   **dass** eine Spektralanalyse eines von dem Wandlerelement (12) nachgewiesenen Signals (50) durchgeführt wird,
   **dass** eine auf Mehrfachechos der Ultraschallpulse zurückgehende Mehrfachechofrequenz (70) im Spektrum des Nachweissignals (50) ermittelt wird und dass auf Grundlage der Mehrfachechofrequenz (70) der Abstand (d) des Objekts (14) zum Ultraschallsensor (10) bestimmt wird.

2. Verfahren nach Anspruch 1,
   **dadurch gekennzeichnet,**
   **dass** zur Spektralanalyse eine Fast-Fourier-Transformation durchgeführt wird.

3. Verfahren nach Anspruch 2,
   **dadurch gekennzeichnet,**
   **dass** im Bereich der Mehrfachechofrequenz (70) im Spektrum zur genaueren Bestimmung der Spektralposition des Intensitätsmaximums für eine ausgewählte Zahl von Punkten um ein zunächst ermitteltes Intensitätsmaximum ein gewichtetes Mittel der Spektralpositionen gebildet wird, wobei die Spektralpositionen der ausgewählten Punkte mit den dort jeweils ermittelten Intensitäten gewichtet werden.

4. Verfahren nach Anspruch 3,
   **dadurch gekennzeichnet,**
   **dass** zur Bildung des gewichteten Mittels der Punkt maximaler Intensität und auf dessen rechter und linker Seite im Spektrum jeweils n, insbesondere n = 2,3 oder 4, weitere Punkte verwendet werden.

5. Verfahren nach einem der Ansprüche 1 bis 4,
   **dadurch gekennzeichnet,**
   **dass** ein Grenzabstand des Objekts (14) zum Ultraschallsensor (10) definiert wird,

**dass** oberhalb des Grenzabstands der Abstand (d) des Objekts (14) unter Verwendung der Laufzeit des ersten Echos (51) bestimmt wird und

**dass** unterhalb des Grenzabstands der Abstand (d) des Objekts (14) unter Verwendung der Mehrfachechofrequenz (70) bestimmt wird.

6. Verfahren nach Anspruch 5,
**dadurch gekennzeichnet,**
**dass** oberhalb des Grenzabstands das Wandlerelement (12) für eine längere Zeit zum Senden der Ultraschallpulse (40) angeregt wird als unterhalb des Grenzabstands.

7. Verfahren nach einem der Ansprüche 1 bis 6,
**dadurch gekennzeichnet,**
**dass** der Gleichanteil und tiefe Frequenzen des Nachweissignals (50) vor Durchführung der Spektralanalyse herausgefiltert werden.

8. Verfahren nach einem der Ansprüche 1 bis 7,
**dadurch gekennzeichnet,**
**dass** spezifisch für einen Ultraschallsensor (10) eine Messzeit eingestellt wird, durch die ein Kompromiss zwischen Messgenauigkeit und Messdauer realisiert wird.

9. Verfahren nach einem der Ansprüche 1 bis 8,
**dadurch gekennzeichnet,**
**dass** die Spektralanalyse für ein Basisband-Signal des Wandlerelements (12) durchgeführt wird.

10. Ultraschallsensor zum Bestimmen eines Abstands eines Objekts, insbesondere zur Durchführung des Verfahrens nach einem der Ansprüche 1 bis 9, mit einem Wandlerelement (12) zum Aussenden von Ultraschallpulsen (40) und zum Nachweis von von dem Objekt (14) reflektierten Ultraschallpulse (51,..,58) und mit einer mit der Wandlereinheit (12) zusammenwirkenden Auswerteeinheit (30) zum Bestimmen des Abstands auf Grundlage der nachgewiesenen Ultraschallpulse,
**dadurch gekennzeichnet,**
**dass** die Auswerteeinheit (30) eine Recheneinheit aufweist zum Durchführen einer Spektralanalyse des von dem Wandlerelement (12) nachgewiesenen Signals (50),
zum Ermitteln einer auf Mehrfachechos der Ultraschallpulse zurückgehenden Mehrfachechofrequenz (70) und
zum Bestimmen des Abstands (d) des Objekts (14) auf Grundlage der Mehrfachechofrequenz (70).

11. Sensor nach Anspruch 10,
**dadurch gekennzeichnet,**
**dass** die Auswerteeinheit (30) ein Mikrocontroller ist mit integrierter Fast-Fourier-Transformations-Funktionalität.

12. Sensor nach Anspruch 11,
**dadurch gekennzeichnet,**
**dass** die Genauigkeit eines dem Wandlerelement (12) nachgeordneten Analog-Digital-Wandlers (20) abgestimmt ist auf die Genauigkeit der Fourier-Transformation.

**Claims**

1. Method for determining a distance of an object from an ultrasonic sensor, particularly according to one of the claims 10 to 12,
in which ultrasonic pulses (40) are emitted by a transducing element (12) and
in which ultrasonic pulses (51, .., 58) reflected by the object are detected by the same transducing element (12),
**characterized in that**
a spectral analysis is performed on a signal (50) detected by the transducing element (12),
a multiple echo frequency (70) attributed to multiple echos of the ultrasonic pulses is determined in the spectrum of the detection signal (50) and
on the basis of the multiple echo frequency (70) the distance (d) of the object (14) from the ultrasonic sensor (10) is determined.

2. Method according to claim 1,
**characterized in that**
a fast Fourier transformation is performed for the spectral analysis.

3. Method according to claim 2,
**characterized in that**
in the range of the multiple echo frequency (70) in the spectrum for a more precise determination of the spectral position of the intensity maximum for a selected number of points around an initially determined intensity maximum a weighted average of the spectral positions is formed, the spectral positions of the selected points being weighted with the intensities in each case determined there.

4. Method according to claim 3,
**characterized in that**
for the formation of the weighted average use is made of the point of maximum intensity and to its right and left in the spectrum in each case n, particularly n = 2, 3 or 4, further points.

5. Method according to one of the claims 1 to 4,
**characterized in**
**that** a limit distance of the object (14) from the ultrasonic sensor (10) is defined, that above the limit distance the distance (d) of the object (14) is determined using the transit time of the first echo (51) and
**that** below the limit distance the distance (d) of the object (14) is determined using the multiple echo frequency (70).

6. Method according to claim 5,
**characterized** inthat
above the limit distance the transducing element (12) is excited for a longer time for emitting ultrasonic pulses (40) than below said limit distance.

7. Method according to one of the claims 1 to 6,
**characterized** inthat
the steady component and low frequencies of the detection signal (50) are filtered out prior to performing the spectral analysis.

8. Method according to one of the claims 1 to 7,
**characterized** inthat
specifically for an ultrasonic sensor (10) a measurement time is set for implementing a compromise between a measurement precision and a measurement duration.

9. Method according to one of the claims 1 to 8,
**characterized** inthat
the spectral analysis is performed for a baseband signal of the transducing element (12).

10. Ultrasonic sensor for determining a distance of an object, particularly for performing the method according to one of the claims 1 to 9,
having a transducing element (12) for emitting ultrasonic pulses (40) and for the detection of the ultrasonic pulses (51, .., 58) reflected by the object (14) and with an evaluation unit (30) cooperating with the transducing unit (12) for determining the distance on the basis of the detected ultrasonic pulses, **characterized** inthat
the evaluating unit (30) has a calculating unit for performing a spectral analysis of the signal (50) detected by the transducing element (12),
for determining a multiple echo frequency (70) attributed to multiple echos of the ultrasonic pulses and for determining the distance (d) of the object (14) on the basis of the multiple echo frequency (70).

11. Sensor according to claim 10,
**characterized in that**
the evaluation unit (30) is a microcontroller with an integrated fast Fourier transformation functionality.

12. Sensor according to claim 11,
**characterized** inthat
the precision of an analog-digital converter (20) downstream of the transducing element (12) is matched to the precision of the Fourier transformation.

## Revendications

1. Procédé pour la détermination d'une distance d'un objet par un capteur à ultrasons, plus particulièrement selon une des revendications 10 à 12,
selon lequel des impulsions ultrasonores (40) sont émises par un élément transducteur (12), et
selon lequel des impulsions ultrasonores (51, ..., 58) réfléchies par l'objet (14) sont détectées par ledit élément transducteur (12),
**caractérisé :**

en ce qu'une analyse spectrale d'un signal (50) détecté par l'élément transducteur (12) est mise en oeuvre,
en ce qu'une fréquence d'écho multiple (70) consécutive aux échos multiples des impulsions ultrasonores est identifiée dans le spectre du signal (50) de détection, et
en ce que la distance (d) de l'objet (14) au capteur à ultrasons (10) est déterminée sur la base de la fréquence d'écho multiple (70).

2. Procédé selon la revendication 1,
**caractérisé :**

en ce que, pour l'analyse spectrale, une transformation de Fourier rapide est mise en oeuvre.

3. Procédé selon la revendication 2,
**caractérisé :**

en ce que, dans la zone de la fréquence d'écho multiple (70) dans le spectre,
pour une détermination plus précise de la position spectrale du maximum d'intensité, une moyenne pondérée des positions spectrales est formée pour un nombre choisi de points autour d'un maximum d'intensité déterminé préalablement, les positions spectrales des points choisis étant pondérées avec les intensités qui y ont été à chaque fois déterminées.

4. Procédé selon la revendication 3,
**caractérisé :**

en ce que, pour la formation de la moyenne pondérée, le point d'intensité maximale ainsi que, de chacun des côtés droit et gauche de celui-ci dans le spectre, n autres points, avec n plus particulièrement égal à 2, 3 ou 4, sont utilisés.

5. Procédé selon une des revendications 1 à 4,
**caractérisé :**

en ce qu'une distance limite de l'objet (14) au capteur à ultrasons (10) est définie,
en ce qu'au-dessus de la distance limite, la distance (d) de l'objet (14) est déterminée par utilisation du temps de propagation associé au premier écho (51), et

en ce qu'au-dessous de la distance limite, la distance (d) de l'objet (14) est déterminée par utilisation de la fréquence d'écho multiple (70).

6. Procédé selon la revendication 5,
   **caractérisé :**

   en ce qu'au-dessus de la distance limite, l'élément transducteur (12) est excité, pour l'émission des impulsions ultrasonores (40), pendant un temps plus long qu'au-dessous de la distance limite.

7. Procédé selon une des revendications 1 à 6,
   **caractérisé :**

   en ce que la composante continue et des basses fréquences du signal (50) de détection sont séparées par filtrage avant la mise en oeuvre de l'analyse spectrale.

8. Procédé selon une des revendications 1 à 7,
   **caractérisé :**

   en ce que, de manière spécifique pour un capteur à ultrasons (10), un temps de mesure est ajusté, au moyen duquel un compromis est réalisé entre la précision de la mesure et la durée de la mesure.

9. Procédé selon une des revendications 1 à 8,
   **caractérisé :**

   en ce que l'analyse spectrale est mise en oeuvre pour un signal en bande de base de l'élément transducteur (12).

10. Capteur à ultrasons pour la détermination d'une distance d'un objet, en particulier pour la mise en oeuvre du procédé selon une des revendications 1 à 9, avec un élément transducteur (12) pour l'émission d'impulsions ultrasonores (40) et pour la détection d'impulsions ultrasonores (51, ..., 58) réfléchies par l'objet (14) et avec une unité de traitement (30) qui coopère avec l'élément transducteur (12) pour la détermination de la distance sur la base des impulsions ultrasonores détectées,
    **caractérisé :**

    en ce que l'unité de traitement (30) comprend une unité de calcul pour la mise en oeuvre d'une analyse spectrale du signal (50) détecté par l'élément transducteur (12),
    pour l'identification d'une fréquence d'écho multiple (70) consécutive aux échos multiples des impulsions ultrasonores, et
pour la détermination de la distance (d) de l'objet (14) sur la base de la fréquence d'écho multiple (70).

11. Capteur selon la revendication 10,
    **caractérisé :**

    en ce que l'unité de traitement (30) est un microcontrôleur qui intègre la fonctionnalité de transformation de Fourier rapide.

12. Capteur selon la revendication 11,
    **caractérisé :**

    en ce que la précision d'un convertisseur analogique-numérique (20) disposé en aval de l'élément transducteur (12) est réglée sur la précision de la transformation de Fourier.

Fig. 1

Fig. 2

Fig. 3

Fig. 4

Fig. 5

Fig. 6

$$f_{me} = \frac{1}{t_e}$$

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0705444 B1
- DE 4204414 C1
- WO 9624027 A2
- EP 0316511 A2
- DE 10103936 C2
- JP 2005121509 A
- DE 10323063 A1